(19) Europäisches Patentamt European Patent Office Office européen des brevets

(11) **EP 2 043 901 B1**

(12) **FASCICULE DE BREVET EUROPEEN**

(45) Date de publication et mention de la délivrance du brevet:
**07.07.2010 Bulletin 2010/27**

(21) Numéro de dépôt: **07766055.3**

(22) Date de dépôt: **16.05.2007**

(51) Int Cl.:
**B62D 7/15** *(2006.01)*

(86) Numéro de dépôt international:
**PCT/FR2007/051281**

(87) Numéro de publication internationale:
**WO 2008/009832 (24.01.2008 Gazette 2008/04)**

(54) **DISPOSITIF ET PROCÉDÉ DE SURVEILLANCE DE LA COMMANDE DU BRAQUAGE DE ROUE ARRIÈRE DIRECTRICE**

VORRICHTUNG UND VERFAHREN ZUR ÜBERWACHUNG DES EINSCHLAGBEFEHLS AN EIN GELENKTES HINTERRAD

DEVICE AND METHOD FOR MONITORING THE TURN COMMAND TO A STEERED REAR WHEEL

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.07.2006 FR 0606666**

(43) Date de publication de la demande:
**08.04.2009 Bulletin 2009/15**

(73) Titulaire: **Renault SAS**
**92100 Boulogne Billancourt (FR)**

(72) Inventeurs:
• **GARCIA ESTEBANEZ, Pablo**
**F-75015 Paris (FR)**
• **GUEGAN, Stéphane**
**F-78000 Versailles (FR)**

(56) Documents cités:
**EP-A1- 0 601 588     FR-A- 2 864 001**

**Description**

La présente invention relève du domaine des systèmes de commande de véhicules terrestres, en particulier de véhicules automobiles à roues.

De façon classique, les véhicules automobiles sont pourvus d'un châssis, d'un habitacle, de roues reliées au châssis par un mécanisme de suspension avec des roues avant directrices commandées par un volant à la disposition du conducteur dans l'habitacle du véhicule.

Le document FR-A-2 681 303 décrit un dispositif de commande de direction arrière pour véhicule automobile à quatre roues directrices, comprenant une plaque formant came et deux galets disposés dans un même plan médian vertical contenant l'axe longitudinal d'une barre de direction arrière commandant le pivotement des roues arrière.

Ce document décrit également que pour obtenir le meilleur comportement routier possible du véhicule, il est nécessaire de braquer les roues arrière dans le même sens que les roues avant pour une valeur d'angle de braquage du volant inférieure à une valeur de seuil prédéterminée et dans le sens opposé aux roues avant lorsque la valeur d'angle de braquage dépasse la valeur de seuil. On obtiendrait ainsi un effet « survireur » souhaitable du véhicule lorsque l'angle de braquage est relativement important, par exemple lorsqu'on gare le véhicule dans un garage ou un parc de stationnement, et un effet « sous-vireur » également souhaitable lorsque l'angle de braquage est relativement petit comme c'est le cas lorsque le véhicule roule relativement rapidement.

Toutefois, un tel dispositif, relativement fruste, ne permet pas d'agir finement sur le comportement du véhicule.

La demande de brevet FR-A-2 864 001 (Renault) vise un procédé et un système de commande du braquage de roue arrière directrice destiné à un véhicule. En fonction de l'angle de braquage de roue avant, de données de déplacement du véhicule, et d'une consigne antérieure de braquage de roue arrière, une consigne actuelle de braquage de roue arrière est élaborée. Ce procédé donne satisfaction et permet de réduire les risques de perte de contrôle, qui peuvent être dus à une réponse du véhicule inadaptée car trop vive, pas assez amortie ou encore peu prévisible. Le document EP0601588 décrit un système de commande de braquage de roues arrière comportant des moyens de correction de la valeur de consigne de braquage lorsque le véhicule se trouve en décélération prononcée.

La demanderesse s'est aperçue qu'il était souhaitable d'augmenter encore la sécurité de fonctionnement et de surveiller la consigne de braquage de roue arrière dont des valeurs aberrantes peuvent être dues à des composants défectueux, par exemple une zone mémoire corrompue ou une implantation ratée d'un algorithme. Une redondance complète des composants matériels et logiciels aurait offert une solution qui s'avère beaucoup trop coûteuse et encombrante.

La présente invention vise à remédier aux inconvénients des dispositifs évoqués ci-dessus.

La présente invention a pour but de fournir de façon économique une sécurité accrue avec une réaction rapide à un système de commande du braquage de roue arrière directrice destiné à un véhicule.

Le procédé de surveillance de la commande du braquage de roue arrière directrice pour un véhicule à au moins trois roues directrices, comprend la comparaison d'une consigne de braquage de roue arrière directrice à un gabarit, ladite comparaison étant effectuée par un calculateur générant la consigne.

On se sert du même calculateur pour générer la consigne et surveiller l'apparition de valeurs aberrantes, ce qui s'avère très économique et peu encombrant donc facile à implanter dans un calculateur configuré pour la génération de consigne de braquage.

Dans un mode de réalisation, on compare une consigne statique de braquage de roue arrière directrice à un gabarit. Le gabarit peut occuper un emplacement de mémoire de faible taille.

Dans un mode de réalisation, le gabarit comprend un minorant et un majorant. Le majorant peut avoir une valeur nulle jusqu'à un premier seuil, est croissant linéairement entre le premier seuil et un deuxième seuil, et a une valeur constante au-delà du deuxième seuil. Le premier seuil peut avoir une valeur nulle. Le premier seuil peut avoir une valeur supérieure à zéro.

Dans un mode de réalisation, le minorant a une valeur nulle.

Dans un mode de réalisation, le minorant a une valeur nulle jusqu'à un troisième seuil, est croissant linéairement entre le troisième seuil et un quatrième seuil, et a une valeur constante au-delà du quatrième seuil. La pente du majorant entre le premier seuil et le deuxième seuil et la pente du minorant entre le troisième seuil et le quatrième seuil peuvent être identiques.

Dans un mode de réalisation, le troisième seuil est compris entre le premier seuil et le deuxième seuil. Le quatrième seuil peut être supérieur au deuxième seuil.

Dans un mode de réalisation, le gabarit est une fonction de l'angle de braquage des roues avant ou de l'angle du volant de direction.

Dans un mode de réalisation, une alarme est générée en cas de franchissement du gabarit par la consigne.

Dans un mode de réalisation, la consigne est limitée au gabarit.

Le système de surveillance de la commande du braquage de roue arrière directrice pour un véhicule à au moins trois roues directrices, comprend un moyen de comparaison d'une consigne de braquage de roue arrière directrice à un gabarit, ladite comparaison étant effectuée par le calculateur générant la consigne.

Dans un mode de réalisation, le gabarit est stocké dans une mémoire non volatile.

Grâce à l'invention, la sécurité du véhicule est augmentée par réduction du risque de consigne dangereuse ou aberrante provoquée par un dysfonctionnement des moyens de génération de la consigne.

La présente invention sera mieux comprise à l'étude de la description détaillée de quelques modes de réalisation pris à titre d'exemples nullement limitatifs et illustrés par les dessins annexés, sur lesquels :

- la figure 1 est une vue schématique d'un véhicule équipé d'un système de commande;

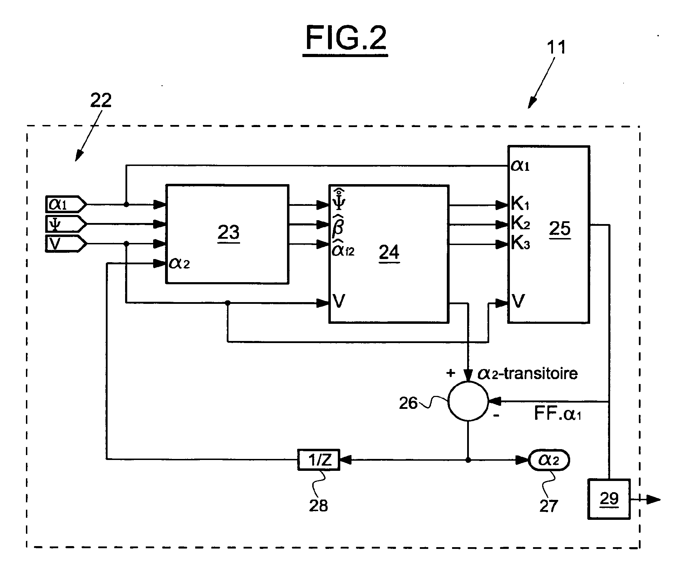

- la figure 2 est un schéma logique du système de commande muni d'un système de surveillance;
- la figure 3 est une courbe montrant le calcul d'une partie statique de consigne de braquage; et
- les figures 4 et 5 sont des courbes montrant des exemples de gabarits.

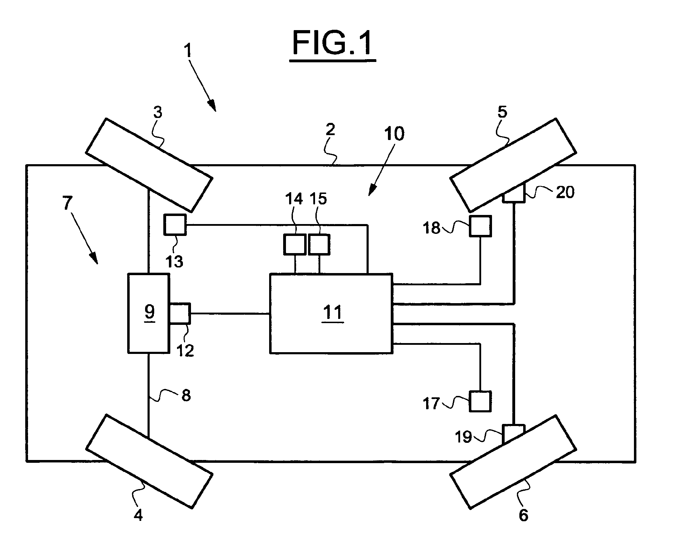

Comme on peut le voir sur la figure 1, le véhicule 1 comprend un châssis 2, deux roues avant directrices 3 et 4 et deux roues arrière directrices 5 et 6, les roues étant reliées au châssis 2 par un mécanisme de suspension non représenté.

Le véhicule 1 se complète par un système de direction 7 comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule.

Le système de commande d'aide au braquage 10 est donné ici à titre d'exemple d'un système pouvant faire l'objet d'une surveillance en vus d'accroître la sûreté de fonctionnement. Le système de commande d'aide au braquage 10 comprend une unité de commande 11, un capteur 12 de la position de braquage des roues avant 3 et 4, par exemple positionné sur l'actionneur 9, un capteur 13 de la vitesse de rotation des roues avant permettant de déterminer la vitesse V du véhicule, un capteur 14 de la vitesse de lacet $\dot{\psi}$ du véhicule, c'est-à-dire de la vitesse de rotation du véhicule autour de son centre de gravité suivant un axe vertical, et un capteur 15 de l'accélération latérale au centre de gravité du véhicule.

En outre, le système 10 comprend des capteurs 17 et 18 de l'angle de braquage des roues arrière 5 et 6, et des actionneurs 19 et 20 permettant d'orienter lesdites roues arrière 5 et 6. Toutefois, un seul capteur 17 et un seul actionneur 19 peuvent suffire à la détection de l'angle de braquage et à l'orientation des roues arrière 5 et 6. Les capteurs de position et de vitesse peuvent être de type optique ou encore magnétique, par exemple à effet Hall, coopérant avec un codeur solidaire d'une partie mobile tandis que le capteur est non tournant.

L'unité de commande 11 peut être réalisée sous la forme d'un microprocesseur équipé d'une mémoire vive, d'une mémoire morte, d'une unité centrale et d'interfaces d'entrée/sortie permettant de recevoir des informations des capteurs et d'envoyer des instructions, notamment aux actionneurs 19 et 20.

Plus précisément, l'unité de commande 11 comprend un bloc d'entrée 12 recevant les signaux en provenance des capteurs 12 à 14, et notamment la vitesse du véhicule V, la vitesse de lacet $\dot{\psi}$ et l'angle de roues avant $\alpha_1$. La vitesse du véhicule peut être obtenue en faisant la moyenne de la vitesse des roues avant ou des roues arrière telle que mesurée par les capteurs d'un système antiblocage de roues. Dans ce cas, il est prévu un capteur 13 par roue, le système antiblocage de roues comprenant une sortie reliée à une entrée de l'unité de commande 11 pour fournir l'information de vitesse du véhicule. Alternativement, chaque capteur 13 est relié à une entrée de l'unité de commande 11, l'unité de commande 11 effectuant alors la moyenne de la vitesse des roues.

L'unité de commande 11 comprend également un observateur d'état 23, permettant d'estimer les informations qui ne sont pas mesurées et qui sont nécessaires à la commande, entre autres les perturbations qui agissent sur le véhicule. L'observateur d'état 23 peut par exemple être construit à partir d'un modèle de véhicule à deux roues directrices sans ballant en faisant l'hypothèse qu'une perturbation d de type échelon peut agir directement sur la vitesse de lacet du véhicule sur un intervalle de temps fini. Une dynamique qui modélise le comportement de l'actionneur peut être ajoutée. L'équation d'état associée au modèle étendu par la perturbation, est la suivante :

$$\begin{bmatrix} \ddot{\psi} \\ \dot{\beta} \\ \dot{\alpha}_{f2} \\ \dot{d} \end{bmatrix} = \begin{pmatrix} -\dfrac{D_1L_1^2 + D_2L_2^2}{VI_z} & \dfrac{D_2L_2 - D_1L_1}{I_z} & -\dfrac{D_2L_2}{I_z} & 0 \\ -1 + \dfrac{D_2L_2 - D_1L_1}{MV^2} & -\dfrac{D_1 + D_2}{MV} & \dfrac{D_2}{MV} & 0 \\ 0 & 0 & 0 & -\dfrac{1}{\tau} \\ 0 & 0 & 0 & 0 \end{pmatrix} \begin{bmatrix} \dot{\psi} \\ \beta \\ \alpha_{f2} \\ d \end{bmatrix} + \begin{pmatrix} 0 \\ 0 \\ \dfrac{1}{\tau} \\ 0 \end{pmatrix} \alpha_2 + \begin{pmatrix} \dfrac{D_1L_1}{I_z} \\ \dfrac{D_1}{MV} \\ 0 \\ 0 \end{pmatrix} \alpha_1$$

$$y = (1 \ 0 \ 0 \ 1) \begin{bmatrix} \dot{\psi} \\ \beta \\ \alpha_{f2} \\ d \end{bmatrix}$$

dans laquelle on note y la sortie considérée, M la masse totale du véhicule, Iz l'inertie du véhicule autour d'un axe vertical passant par son centre de gravité, L1 la distance du centre de gravité à l'essieu avant, L2 la distance du centre de gravité à l'essieu arrière, L l'empattement du véhicule égal à L1+L2, D1 la rigidité de dérive avant, D2 la rigidité de dérive arrière, $\alpha_1$ l'angle des roues avant avec l'axe longitudinal du véhicule, $\alpha_2$ l'angle de consigne des roues arrière, $\alpha_{f2}$ l'angle de braquage réel des roues arrière, V la vitesse du véhicule, $\psi$ la vitesse de lacet, $\beta$ l'angle de dérive, c'est-à-dire de l'angle que fait le vecteur vitesse du véhicule avec l'axe longitudinal dudit véhicule., et $\tau$ le temps de réponse de l'actionneur.

À partir de ce modèle, on développe la théorie classique des observateurs linéaires. L'observateur d'état 23 permet d'estimer les états du véhicule et l'ensemble des perturbations qui agissent sur le véhicule. L'observateur d'état peut donc utiliser l'équation suivante :

$$\begin{bmatrix} \dot{\hat{\psi}} \\ \dot{\hat{\beta}} \\ \dot{\hat{\alpha}}_{f2} \\ \dot{\hat{d}} \end{bmatrix} = \begin{pmatrix} -\dfrac{D_1L_1^2 + D_2L_2^2}{VI_z} & \dfrac{D_2L_2 - D_1L_1}{I_z} & -\dfrac{D_2L_2}{I_z} & 0 \\ -1 + \dfrac{D_2L_2 - D_1L_1}{MV^2} & -\dfrac{D_1 + D_2}{MV} & \dfrac{D_2}{MV} & 0 \\ 0 & 0 & 0 & -\dfrac{1}{\tau} \\ 0 & 0 & 0 & 0 \end{pmatrix} \begin{bmatrix} \hat{\dot{\psi}} \\ \hat{\beta} \\ \hat{\alpha}_{f2} \\ \hat{d} \end{bmatrix} + \begin{pmatrix} 0 \\ 0 \\ \dfrac{1}{\tau} \\ 0 \end{pmatrix} \alpha_2 + \begin{pmatrix} \dfrac{D_1L_1}{I_z} \\ \dfrac{D_1}{MV} \\ 0 \\ 0 \end{pmatrix} \alpha_1 + Ko(V)(\dot{\psi} - \hat{y})$$

$$\hat{y} = (1 \ 0 \ 0 \ 1) \begin{bmatrix} \hat{\dot{\psi}} \\ \hat{\beta} \\ \hat{\alpha}_{f2} \\ \hat{d} \end{bmatrix}$$

ave ∧ qui signifie que les valeurs sont estimées, d la perturbation subie par le véhicule, et Ko(V) le paramètre de réglage de l'observateur d'état qui évolue en fonction de la vitesse du véhicule. Les quatre valeurs estimées $\hat{\dot{\psi}}, \hat{\beta}, \hat{\alpha}_{f2}$ et $\hat{d}$ fournissent une estimation de l'état du véhicule qui pourrait être utilisée par d'autres éléments de l'unité de commande 11.

L'unité de commande 11 comprend en outre un bloc 24 de calcul des transitoires. Le bloc 24 calcule la valeur de commande de l'angle de braquage des roues arrière 5 et 6 noté $\alpha_2$ - transitoire qui permet d'agir sur la dynamique de la réponse transitoire. Le calcul peut être effectué par une technique de placement de pôles. On peut se référer à cet égard au document Kautsky, J. et N.K. Nichols, « Robust Pole Assignment in Linear State Feedback », Int. J. Control, 41 (1985), pages 1129-1155. Si on note [a1(V)+b1(V)i (a2(V)+b2(V)i (a3(V)+b3(V)i]. Les trois pôles du système décrit ci-dessus sans la perturbation, a(V) et b(V) correspondant respectivement aux parties réelles et imaginaires de chacun des pôles à la vitesse V, on cherche le correcteur K=[K1(V) K2(V) K3(V)] qui placera les pôles du système bouclé en

$$[Tdyn11(V).a1(V)+Tdyn12(V).b1(V).i$$

$$Tdyn21(V).a2(V)+Tdyn22(V).b2(V).i$$

$$Tdyn31(V).a3(V)+Tdyn32(V).b3(V).i]$$

Tdyn11, Tdyn12, Tdyn21, Tdyn22, Tdyn31, Tdyn32 étant les paramètres de réglage (variables en fonction de la vitesse du véhicule V de la réponse transitoire du véhicule.

Le correcteur K(Vo) peut se calculer, pour chaque vitesse Vo choisie, par la méthode de placement de pôles décrite dans le document précité. Le correcteur K(V) est ensuite interpolé en fonction de la vitesse. On obtient ainsi la variable de commande :

$$\alpha_{2-Transitoire} = K_1(V).\hat{\dot{\psi}} + K_2(V)\,\hat{\beta} + K_3(V)\hat{\alpha}_{f2}$$

On notera que si les paramètres de réglage sont égaux à 1, on ne modifie pas la réponse dynamique du véhicule, qu'un paramètre supérieur à 1 se traduit par une augmentation de la vivacité de la réponse du véhicule et qu'un paramètre inférieur à 1 se traduit par une diminution de la vivacité de la réponse du véhicule. On peut prévoir, à titre d'exemple de réglage:

Tdyn11 = 0,8

Tdyn12 = 0

Tdyn21 = 0,8

Tdyn22 = 0

Tdyn31 = 0,8

Tdyn32 = 0

Un tel réglage permet de ralentir la réponse dynamique du véhicule et de supprimer les oscillations en vitesse de lacet et dérive du véhicule. À vitesse élevée, 90 km/h par exemple, ce réglage permet d'optimiser le passage d'un double changement de file.

L'unité de commande 11 comprend en outre un bloc 25 de calcul de la commande statique notée $\alpha_2$-statique recevant en entrée l'angle de braquage $\alpha1$ de roues avant tel que mesuré par le capteur 12, les coefficients K1, K2 et K3 calculés le bloc 24 et la vitesse V du véhicule mesurée par le capteur 13. La commande $\alpha_2$-statique permet d'agir sur la réponse statique du véhicule et de modifier la valeur stabilisée de la vitesse de lacet obtenue suite à un coup de volant d'amplitude donnée. Le résultat peut être exprimé par comparaison avec le gain statique qu'on obtiendrait sur le véhicule dont les roues arrière sont non directrices. $\left[\dfrac{\dot{\psi}_{STABILISE}}{\alpha_1}\right]_{4RD} = Tgs.\left[\dfrac{\dot{\psi}_{STABILISE}}{\alpha_1}\right]_{2RD}$ où Tgs est le paramètre de réglage qui peut varier, si nécessaire, en fonction de la vitesse V.

Afin de rendre les parties transitoire et stabilisée indépendantes, on réalise la correction suivante sur $\alpha_{2transitoire}$ $\alpha_2 = \alpha_{2transitoire} - FF.\alpha_1$ où le gain « FF » est défini par la formule ci-dessous :

$$(1-(Tgs(V)).(1+K3(V))+Tgs(V).(K1(V).G\psi+K2(V).G\beta2)+K2(V)$$

avec :

$$G\dot{\psi} = \dfrac{V}{L + \dfrac{M.(L_2 D_2 - L_1 D_1)}{LD_1 D_2}}$$

$$G_{\beta_2} = G\psi.\left(\dfrac{L_1}{V} + \dfrac{L_2 MV}{LD_1}\right)$$

Ceci permet de garantir que $\alpha_{2stabilisé} = (1-Tgs).\alpha_1$

Si Tgs est égal à 1, la réponse statique du véhicule n'est pas modifiée et donc identique à celle d'un véhicule à roues arrière non directrices. Une valeur du coefficient Tgs supérieure à 1 se traduit par une augmentation de la réponse statique du véhicule, tandis qu'une valeur inférieure à 1 se traduit par une diminution de la réponse statique du véhicule. On peut prévoir Tgs=1,2 pour une vitesse de 90 km/h, ce qui permet de rendre la réponse du véhicule plus directe et donc d'optimiser le passage d'un double changement de file.

L'unité de commande 11 se complète par un soustracteur 26, une sortie 27 et un retard unitaire 28. Le soustracteur 26 reçoit sur son entrée positive la sortie de commande $\alpha_{2\text{-transitoire}}$ du bloc 24 et sur son entrée négative la sortie de commande $\alpha_{2\text{-statique}}$ du bloc 25. La sortie du soustracteur 26 est reliée, d'une part, à la sortie générale 27 de l'unité de commande 11, et, d'autre part, au retard unitaire 28, dont la sortie est reliée à une entrée de l'observateur d'état 23 pour lui fournir l'angle de braquage des roues arrière à un instant précédent.

Le système de commande de braquage de roues arrière présente une structure en boucle fermée au moyen d'un contrôleur permettant de modifier la dynamique du système et un gain permettant le réglage du gain statique, le tout variable en fonction de la vitesse.

La stratégie de commande permet de régler la partie transitoire de la réponse latérale du véhicule à un coup de volant. En particulier, on peut régler la vitesse de la réponse ainsi que son amortissement. Le réglage final, fonction de la vitesse du véhicule, permet d'optimiser l'efficacité et la facilité de passage d'un double changement de file ou encore la manoeuvre à basse vitesse.

La stratégie de commande permet de régler la partie statique de la réponse latérale du véhicule à un coup de volant. Le réglage final, fonction de la vitesse du véhicule, permet par exemple d'optimiser l'efficacité et la facilité de passage d'un double changement de file et/ou la manoeuvre à basse vitesse.

Les parties statique et dynamique de la réponse du véhicule peuvent faire l'objet d'un réglage indépendant. La structure en boucle fermée assure une excellente précision et une robustesse élevée. En variante, une structure en boucle ouverte peut être envisagée. En outre, il est possible de tenir compte de la dynamique de l'actionneur 9 des roues avant 3 et 4 et des actionneurs 19 et 20 des roues arrière 5 et 6. Le réglage des paramètres est rapide et intuitif, car lesdits paramètres sont liés aux performances minimales du véhicule, c'est-à-dire aux performances d'un véhicule à roues arrière non directrices. En effet, des paramètres de réglage égaux à 1 ne modifient pas le comportement du véhicule, alors que des paramètres de réglage supérieurs à 1 rendent le comportement plus vif et plus direct et vice-versa.

L'unité de commande 11 comprend un système de surveillance 29 de la partie statique $\alpha_{2\text{-statique}}$ de la consigne. Un système de surveillance de la partie dynamique $\alpha_{2\text{-dynamique}}$ de la consigne peut également être mis en oeuvre. Le système de surveillance 29 peut se présenter sous la forme d'une partie logicielle stockée dans une mémoire rémanente de l'unité de commande 11 et exécutée par le microprocesseur de l'unité de commande 11 ou encore d'un microcircuit dédié associé au microprocesseur. Le système de surveillance 29 détermine si la partie statique $\alpha_{2\text{-statique}}$ est conforme à un gabarit et émet une alarme en cas de franchissement du gabarit. L'alarme est transmise à un dispositif extérieur non représenté. Alternativement, l'alarme provoque une modification de la partie statique $\alpha_{2\text{-statique}}$ en lui substituant la limite imposée par le gabarit.

Pour chaque vitesse, la consigne de braquage $\alpha_{2\text{-statique}}$ nominale est calculée comme suit :

$$\alpha_{2-STATIQUE}\,nominale = \begin{cases} \alpha_{2\max} & si\ \left|\alpha_{2NonSatur}\right| > \left|\alpha_{2\max}\right| \\ \alpha_{2NonSatur} & si\ \left|\alpha_1\right| \geq d \quad et \quad \left|\alpha_{2NonSatur}\right| \leq \left|\alpha_{2\max}\right| \\ 0 & si\ \left|\alpha_1\right| < d \end{cases}$$

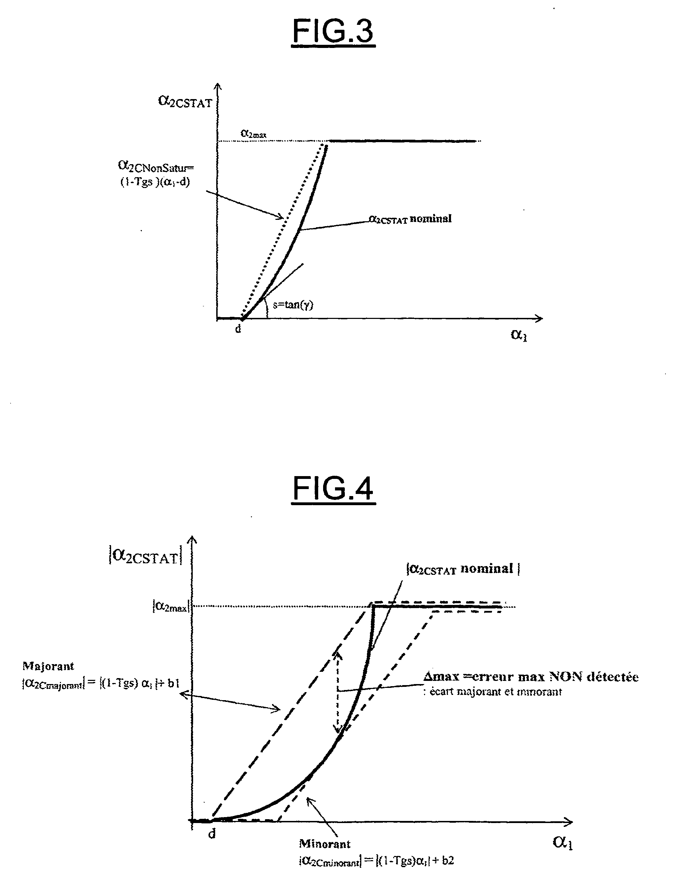

avec $\alpha_{2NonSaiur}$ = K(1-Tgs)($\alpha_1$-d), voir figure 3, où K est un facteur de forme qui vérifie 0≤K≤1, lequel est calculé en imposant une pente s au point $\alpha_1$=d, et d est une zone morte pour laquelle le braquage arrière est nul. $\alpha_{2\max}$ est une valeur plafond de la partie statique de la consigne.

Le paramètre Tgs est toujours positif et dépend uniquement de la vitesse. Si Tgs=1, alors la consigne statique $\alpha_{2\text{-statique}}$=0, ce qui équivaut en régime permanent, une fois la vitesse de lacet stabilisée, à un véhicule 2 roues directrices.

Dans la vérification de la consigne statique de braquage, le système de surveillance 29 contrôle séparément le signe et la valeur absolue de celle-ci.

Selon un premier mode de réalisation, on détermine le signe :

$$\text{sign}(\alpha_{2\text{-statique}}) = \text{sign}(\alpha_1) \quad si \quad 0 < Tgs < 1 \qquad (1)$$

$$\text{sign}(\alpha_{2\text{-statique}}) = -\text{sign}(\alpha_1) \quad si \quad Tgs > 1 \qquad (2)$$

$$\alpha_{2\text{-statique}} \approx 0 \quad si \quad Tgs = 1 \qquad (3)$$

On signalera donc une erreur si l'une de ces trois relations n'est pas vérifiée.

Afin de surveiller la valeur absolue de la consigne statique de braquage, le système de surveillance 29 établit les droites qui décrivent un majorant et un minorant de celle-ci.

$$Majorant: \qquad \left|\alpha_{2\,majorant}\right| = \left|(1-Tgs)\alpha_1\right| + b1 \qquad (4)$$

$$Minorant: \qquad \left|\alpha_{2\,minorant}\right| = \left|(1-Tgs)\alpha_1\right| + b2 \qquad (5)$$

Avec b1=-(1-Tgs)*d et b2 calculé de sorte que le minorant soit parallèle au majorant et tangeant à la courbe minorée $|\alpha_{2\text{-statique}}$nominale|, voir figure 4.

Ainsi, pour tout Tgs≠1, le système de surveillance 29 vérifie que

$$\left|(1-Tgs)\alpha_1\right| + b2 \leq \left|\alpha_{2\text{-statique}}\right| \leq \left|(1-Tgs)\alpha_1\right| + b1 \qquad (6)$$

et si Tgs≈1, le système de surveillance 29 vérifie que la consigne est petite :

$$\left| \alpha_{2\text{-statique}} \right| \approx 0 \qquad\qquad (7)$$

Le système de surveillance 29 signale une erreur quand un écart $\Delta$ prédéterminé par rapport à la valeur nominale fait que la consigne calculée est à l'extérieur du gabarit défini par le majorant et le minorant.

A titre indicatif, cette stratégie fonctionne bien dans environ 95% des situations réelles de conduite, si les écarts qu'il faut détecter sont ceux supérieurs à 0.3˚. Par ailleurs, les situations restantes ont lieu pour des vitesses inférieures à 55 km/h, donc non dangereuses.

Afin de mettre en oeuvre cette stratégie à des fins sécuritaires, il est nécessaire de disposer en temps réel des informations fiables des angles de braquage des roues avant, de la vitesse véhicule, et de la valeur Tgs=f(V) sécurisée.

Dans un deuxième mode de réalisation, on vise à s'affranchir de l'information Tgs=f(V), ce qui peut être utile dans les cas où cette information, qui doit être disponible en temps réel, n'est pas sécurisée.

A sa place, sont utilisées les valeurs maximales et minimales de Tgs, ainsi que la vitesse pour laquelle Tgs change de signe.

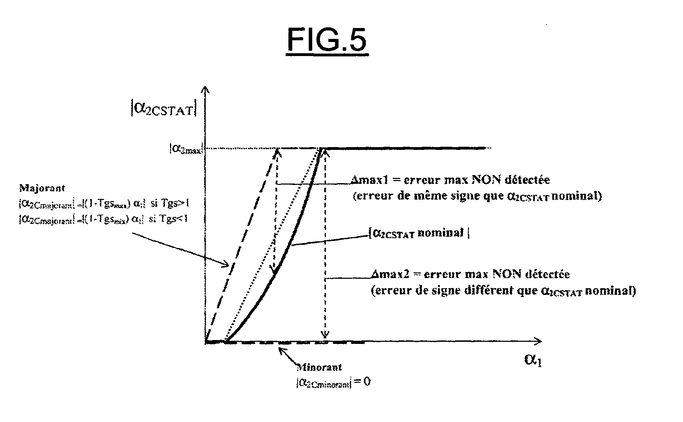

Pour chaque vitesse, le système de surveillance 29 établit le gabarit de la figure 5.

Ainsi, si Tgs>1, le système de surveillance 29 vérifie que

$$0 \leq \left| \alpha_{2\text{-statique}} \right| \leq \left| (1 - \text{Tgs}_{max})\alpha_1 \right| \qquad\qquad (8)$$

Si 0<Tgs<1, le système de surveillance 29 vérifie que

$$0 \leq \left| \alpha_{2\text{-statique}} \right| \leq \left| (1 - \text{Tgs}_{min})\alpha_1 \right| \qquad\qquad (9)$$

Si Tgs≈1, le système de surveillance 29 vérifie que la consigne est petite :

$$\left| \alpha_{2\text{-statique}} \right| \approx 0 \qquad\qquad (10)$$

On considère que $\alpha_1$ et V sont des informations sécurisées en entrée, mais on n'a plus besoin du paramètre Tgs=f(V) en temps réel et sécurisé pour mettre en oeuvre cette stratégie de contrôle, puisque seules les valeurs $\text{Tgs}_{max}$ et $\text{Tgs}_{min}$ et la vitesse pour laquelle Tgs change de signe sont utilisées pour le calcul des gabarits.

Dans ce mode de réalisation, la vérification du signe de $\alpha_2$ est faite comme décrite précédemment pour le premier mode.

Ce mode de réalisation est donc plus fruste et plus robuste.

L'invention offre une sécurité accrue de la consigne de braquage des roues arrière avec des moyens économiques.

**Revendications**

1. Procédé de surveillance de la commande du braquage de roue arrière directrice pour un véhicule à au moins trois roues directrices, dans lequel on compare une consigne de braquage de roue arrière directrice à un gabarit, ladite comparaison étant effectuée par le calculateur générant la consigne, et ledit gabarit étant une fonction de l'angle de braquage des roues avant ou de l'angle du volant de direction.

2. Procédé selon la revendication 1, dans lequel on compare une consigne statique de braquage de roue arrière directrice à un gabarit.

**3.** Procédé selon la revendication 1 ou 2, dans lequel le gabarit comprend un minorant et un majorant.

**4.** Procédé selon la revendication 3, dans lequel le majorant a une valeur nulle jusqu'à un premier seuil, est croissant linéairement entre le premier seuil et un deuxième seuil, et a une valeur constante au-delà du deuxième seuil.

**5.** Procédé selon la revendication 4, dans lequel le premier seuil a une valeur nulle.

**6.** Procédé selon la revendication 3 ou 4, dans lequel le premier seuil a une valeur supérieure à zéro.

**7.** Procédé selon l'une quelconque des revendications 3 à 6, dans lequel le minorant a une valeur nulle.

**8.** Procédé selon l'une quelconque des revendications 3 à 6, dans lequel le minorant a une valeur nulle jusqu'à un troisième seuil seuil, est croissant linéairement entre le troisième seuil et un quatrième seuil, et a une valeur constante au-delà du quatrième seuil.

**9.** Système de surveillance (29) de la commande du braquage de roue arrière directrice (5) pour un véhicule (1) à au moins trois roues directrices, **caractérisé par le fait qu'**il comprend un moyen de comparaison d'une consigne de braquage de roue arrière directrice à un gabarit, ladite comparaison étant effectuée par le calculateur générant la consigne, et ledit gabarit étant une fonction de l'angle de braquage des roues avant ou de l'angle du volant de direction.

**10.** Système selon la revendication 9, dans lequel le gabarit est stocké dans une mémoire non volatile.

**Claims**

**1.** Method for monitoring the control of steered rear wheel deflection for a vehicle with at least three steered wheels, in which a steered rear wheel deflection setpoint is compared with a template, said comparison being performed by the computer generating the setpoint, and said template being a function of the angle of deflection of the front wheels or of the angle of the steering wheel.

**2.** Method according to Claim 1, in which a static steered rear wheel deflection setpoint is compared with a template.

**3.** Method according to Claim 1 or 2, in which the template comprises a lower bound and an upper bound.

**4.** Method according to Claim 3, in which the upper bound has a zero value up to a first threshold, is linearly increasing between the first threshold and a second threshold, and has a constant value beyond the second threshold.

**5.** Method according to Claim 4, in which the first threshold has a zero value.

**6.** Method according to Claim 3 or 4, in which the first threshold has a value greater than zero.

**7.** Method according to any one of Claims 3 to 6, in which the lower bound has a zero value.

**8.** Method according to any one of Claims 3 to 6, in which the lower bound has a zero value up to a third threshold, is linearly increasing between the third threshold and a fourth threshold, and has a constant value beyond the fourth threshold.

**9.** System (29) for monitoring the control of the steered rear wheel deflection (5) for a vehicle (1) with at least three steered wheels, **characterized in that** it comprises a means for comparing a steered rear wheel deflection setpoint with a template, said comparison being performed by the computer generating the setpoint, and said template being a function of the angle of deflection of the front wheels or of the angle of the steering wheel.

**10.** System according to Claim 9, in which the template is stored in a nonvolatile memory.

## EP 2 043 901 B1

**Patentansprüche**

1. Verfahren zur Überwachung der Steuerung des Einschlags eines gelenkten Hinterrads für ein Fahrzeug mit mindestens drei gelenkten Rädern, bei dem ein Einschlagsollwert eines gelenkten Hinterrads mit einem Modell verglichen wird, wobei der Vergleich von dem Rechner durchgeführt wird, der den Sollwert erzeugt, und das Modell eine Funktion des Einschlagwinkels der Vorderräder oder des Winkels des Lenkrads ist.

2. Verfahren nach Anspruch 1, bei dem ein statischer Einschlagsollwert eines gelenkten Hinterrads mit einem Modell verglichen wird.

3. Verfahren nach Anspruch 1 oder 2, bei dem das Modell eine Minorante und eine Majorante enthält.

4. Verfahren nach Anspruch 3, bei dem die Majorante bis zu einer ersten Schwelle einen Nullwert hat, zwischen der ersten Schwelle und einer zweiten Schwelle linear zunimmt und jenseits der zweiten Schwelle einen konstanten Wert hat.

5. Verfahren nach Anspruch 4, bei dem die erste Schwelle einen Nullwert hat.

6. Verfahren nach Anspruch 3 oder 4, bei dem die erste Schwelle einen Wert höher als Null hat.

7. Verfahren nach einem der Ansprüche 3 bis 6, bei dem die Minorante einen Nullwert hat.

8. Verfahren nach einem der Ansprüche 3 bis 6, bei dem die Minorante bis zu einer dritten Schwelle einen Nullwert hat, zwischen der dritten Schwelle und einer vierten Schwelle linear zunimmt und jenseits der vierten Schwelle einen konstanten Wert hat.

9. System zur Überwachung (29) der Steuerung des Einschlags eines gelenkten Hinterrads (5) für ein Fahrzeug (1) mit mindestens drei gelenkten Rädern, **dadurch gekennzeichnet, dass** es eine Einrichtung zum Vergleich eines Einschlagsollwerts eines gelenkten Hinterrads mit einem Modell enthält, wobei der Vergleich durch den Rechner durchgeführt wird, der den Sollwert erzeugt, und das Modell eine Funktion des Einschlagwinkels der Vorderräder oder des Winkels des Lenkrads ist.

10. System nach Anspruch 9, bei dem das Modell in einem nicht-flüchtigen Speicher gespeichert wird.

# FIG.1

# FIG.2

## FIG.3

## FIG.4

# FIG.5

$|\alpha_{2CSTAT}|$

$|\alpha_{2max}|$

Majorant
$|\alpha_{2Cmajorant}| = |(1-Tgs_{max})\,\alpha_1|$  si Tgs>1
$|\alpha_{2Cmajorant}| = |(1-Tgs_{min})\,\alpha_1|$  si Tgs<1

$\Delta$max1 = erreur max NON détectée
(erreur de même signe que $\alpha_{2CSTAT}$ nominal)

$|\alpha_{2CSTAT}$ nominal |

$\Delta$max2 = erreur max NON détectée
(erreur de signe différent que $\alpha_{2CSTAT}$ nominal)

$\alpha_1$

Minorant
$|\alpha_{2Cminorant}| = 0$

## RÉFÉRENCES CITÉES DANS LA DESCRIPTION

### Documents brevets cités dans la description

- FR 2681303 A
- FR 2864001 A, Renault
- EP 0601588 A

### Littérature non-brevet citée dans la description

- **Kautsky, J. ; N.K. Nichols.** Robust Pole Assignment in Linear State Feedback. *Int. J. Control,* 1985, vol. 41, 1129-1155